# EUROPÄISCHE PATENTANMELDUNG

(11) **EP 0 634 311 A2**
(43) Veröffentlichungstag der Anmeldung: **18.01.1995**
(21) Anmeldenummer: 94109566.3
(22) Anmeldetag: 21.06.1994
(51) Int. Cl.: B62B 1/12, B62B 5/02

(54) **Handkarren zum Transport von Lasten über Treppen**

(30) Priorität: 15.07.1993 DE 4323751
(71) Anmelder: Knauer, Dieter, D-73240 Wendlingen (DE)
(72) Erfinder: Knauer, Dieter, D-73240 Wendlingen (DE)
(74) Vertreter: Kratzsch, Volkhard, Dipl.-Ing.

(57) **Zusammenfassung**

Die Erfindung betrifft einen Handkarren zum Transport von Lasten über Treppen, zwischen dessen relativ zueinander bewegbaren Lasttragelement (2) und Rahmen (3) eine Fixiereinrichtung (4) vorgesehen ist, mittels welcher Rahmen (3) und Lasttragelement (2) relativ zueinander festlegbar ist. Der Handkarren ist mit einem eigenständigen Stützteil (45) versehen. Dieses ist am Lasttragelement (2) oder am Rahmen (3) lösbar anbringbar.

## Beschreibung

Die Erfindung betrifft einen Handkarren zum Transport von Lasten über Treppen, zwischen dessen relativ zueinander bewegbaren Lasttragelement und Rahmen eine Fixiereinrichtung vorgesehen ist, mittels welcher Rahmen und Lasttragelement relativ zueinander festlegbar ist.

Ein derartiger Handkarren ist aus dem Deutschen Patent 33 41 024 bekannt, der sich vorrangig nur als treppengängiges Transportgerät eignet.

Die Aufgabe der Erfindung besteht darin, einen Handkarren dieser Art so auszubilden, daß dieser eine Vielfachverwendung gestattet.

Die Aufgabe wird durch die Merkmale im Kennzeichnungsteil des Anspruchs 1 gelöst. Dadurch ergibt sich für den Benutzer der Vorteil, daß der Handkarren einen Treppentransporter und einen Sackkarren in einem einzigen Gerät miteinander vereint. Dadurch kann der Handkarren sowohl als Treppentransporter als auch als Sackkarren verwendet werden. Der Vorteil besteht darin, daß durch einfaches Verschwenken des Rahmens und/oder des Lasttragelementes und/oder des Stützteiles in wenigen Sekunden aus dem Handkarren mit einer Funktion als Sackkarren ein Handkarren mit einer Funktion als Treppentransporter und umgekehrt gemacht werden kann. Das Stützteil ist dem Handkarren zusätzlich zum Lasttragelement zugeordnet.

Die Fixiereinrichtung gestattet dabei, daß dieser Vorgang durch Fixieren bzw. Lösen vom Benutzer schnell und einfach durchgeführt werden kann. Dabei können zusammenwirkende Blockierteile als Friktionsteile und/oder Magnetelemente und/oder Klettverschlußteile und/oder Riegelteile oder dergleichen ausgebildet sein. Ferner kann Rahmen und Lasttragelement schwenkbar miteinander verbunden sein oder steckbar, schiebbar oder in sonstiger Weise zueinander festlegbar sein.

Es ist vorteilhaft, wenn das Stützteil lösbar am Lasttragelement anbringbar ist. Auf diese Weise wird der Benutzer bei Verwendung des Handkarrens als Treppentransporter nicht zusätzlich mit dem Gewicht des Stützteiles belastet. Zudem sind Form und Größe des Stützteiles unabhängig vom Handkarren.

Es ist vorteilhaft, wenn das Stützteil schwenkbar am Lasttragelement anbringbar ist. Auf diese Weise kann der Handkarren schnell in eine Sackkarre umgewandelt werden.

Es ist vorteilhaft, wenn das Stützteil beabstandete, den Riegelteilen am Rahmen entsprechende Steckteile aufweist und mittels Eingreifen dieser Steckteile in die Riegelteile des Lasttragelementes an letzterem lösbar befestigbar ist. Auf diese Weise werden die am Lasttragelement vorhandenen Riegelteile als hülsenartige Einsteckteile für die Steckteile des Stützteiles benutzt.

Es ist vorteilhaft, wenn das Stützteil aus einem etwa U-förmigen Bügel, insbesondere in Form eines Rohrstückes gebildet ist.

Ein weiterer eigenständiger Erfindungsgegenstand besteht darin, daß mindestens zwei bewegliche Teile des Lasttragelementes aneinander schiebbar oder schwenkbar miteinander verbunden sind. Besonders vorteilhaft kann das hintere Teil teleskopartig mit dem vorderen beweglichen Teil des Lasttragelementes verbunden werden. Auf diese Weise kann das Lasttragelement vom Benutzer verkürzt werden, wenn der Handkarren als Sackkarren benutzt wird und das auskragende Lasttragelement beim Transport stören würde.

Ein weiterer eigenständiger Erfindungsgegenstand besteht darin, daß die Fixiereinrichtung aus zusammenwirkenden Blockierteilen besteht, die als Riegelteile ausgebildet sind und daß die Riegelteile zumindest einen Eingreifriegel, der am einen Teil gehalten ist und einen mit mindestens einer Riegelaufnahme, in die der Eingreifriegel eingreifen kann, versehenen Riegelhalter aufweisen, der am anderen Teil, insbesondere dem Rahmen, gehalten ist. Auf diese Weise ist es möglich, den Eingreifriegel z. B. als um eine Achse schwenkbares Teil oder auch als entlang einer Linie verschiebbares Teil auszubilden. Die Verschiebelinie kann als Gerade oder als gebogene Linie ausgebildet sein. Der Eingreifriegel besteht dabei aus einem Führungsteil, einem Eingreifteil und einem Verbindungsteil, welches das Führungsteil mit dem Eingreifteil verbindet. Der Begriff "der eine Teil" bezeichnet dabei z. B. das Lasttragelement oder ein Teil, das am Lasttragelement fixiert ist, z. B. das Verbindungselement oder in kinematischer Umkehr den Rahmen.

Es ist vorteilhaft, wenn der Eingreifriegel als verschiebbarer Riegelzapfen ausgebildet ist, der am einen Teil geführt ist. Der verschiebbare Riegelzapfen ist dabei entlang einer Geraden verschiebbar gehalten. Eingreifteil, Verbindungsteil und Führungsteil fallen dabei in einem Teil zusammen; dabei greift der Riegelzapfen formschlüssig in die zugeordnete Riegelaufnahme.

Es ist vorteilhaft, wenn der Riegelhalter um eine Schwenkachse schwenkbar ausgebildet ist und zwei Riegelaufnahmen aufweist, deren Mittenlängsachsen etwa einen Winkel von 90 Grad miteinander einschließen. Auf diese Weise kann der Riegelhalter durch einfaches Verschwenken desselben um seine Schwenkachse zwei verschiedene Fixierpositionen einnehmen, die miteinander einen Winkel von 90 Grad einschließen. Ist der Riegelhalter am Rahmen angeordnet, kann der Rahmen in einer ersten Fixierposition vertikal ausgerichtet und in einer zweiten Fixierposition etwa horizontal ausgerichtet sein.

Es ist von Vorteil, wenn die Mittenlängsachse der einen Riegelaufnahme des Riegelhalters im Fixierzustand desselben etwa parallel zur Ebene des Lasttragelementes verläuft und wenn die Mittenlängsachse der anderen Riegelaufnahme des Riegelhalters etwa unter einem rechten Winkel zur Ebene des Lasttragelementes verläuft.

Es ist vorteilhaft, wenn sowohl die Mittenlängsachse der einen Riegelaufnahme als auch die Mittenlängsachse der anderen Riegelaufnahme etwa unter einem Winkel von 45 Grad zur Ebene des Lasttragelementes verläuft.

Es ist von Vorteil, wenn zwischen beiden Riegelaufnahmen eine Auflauffläche verläuft, auf der der Riegelzapfen beim Schwenken, insbesondere des Rahmens um dessen Schwenkachse, aufsitzt. Auf diese Weise wird garantiert, daß der Riegelzapfen im Ausrastzustand desselben in einer Position verbleibt, aus welcher er z. B. durch einen Schiebevorgang in Richtung auf die Schwenkachse 167 zu in seinen Einrastzustand gebracht werden kann.

Es ist von Vorteil, wenn die Auflauffläche geradlinig oder bogenförmig, insbesondere kreisbogenabschnittsförmig, verläuft.

Es ist vorteilhaft, wenn dem Rahmen zumindest ein Endanschlag zugeordnet ist, der im Zusammenwirken mit zumindest einem Gegenanschlag die Schwenkbarkeit des Rahmens im Uhrzeigersinn als auch im Gegenuhrzeigersinn begrenzt. Auf diese Weise ist der Schwenkbereich des Rahmens klar begrenzt, so daß der Handkarren einfach und schnell von einem Treppentransporter in einen Sackkarren und umgekehrt verwandelt werden kann.

Es ist von Vorteil, wenn der Riegelhalter den zumindest einen Endanschlag aufweist, welcher dem Rahmen zugeordnet ist.

Es ist vorteilhaft, wenn der Endanschlag des Riegelhalters als Anschlagfläche ausgebildet ist, die am jeweils hinteren, offenen Ende jeder Riegelaufnahme in etwa radialer Richtung über das offene Ende der Riegelaufnahme hinaus vorsteht. Der auskragende Schenke der Riegelaufnahme ist dabei als Endanschlag ausgebildet.

Es ist vorteilhaft, wenn der Riegelzapfen als Gegenanschlag für den zumindest einen Endanschlag des Riegelhalters ausgebildet ist. Dabei ist die jeweilige Riegelaufnahme automatisch immer dann in Eingreifposition, wenn der Rahmen mit seinem Endanschlag am Gegenanschlag anschlägt.

Es ist von Vorteil, wenn die Riegelzapfen mittels einer vorzugsweise damit einstückigen Längsleiste verbunden sind, die etwa parallel zur Schwenkachse des Rahmens verläuft. Da die Längsleiste wenig Raum beansprucht, kann die gesamte Fixiereinrichtung so klein als möglich ausgebildet werden.

Es ist von Vorteil, wenn der Rahmen an dem Teil um seine Schwenkachse schwenkbar gehalten und gelagert ist, der den jeweiligen Riegelzapfen trägt und vorzugsweise, daß an diesem Teil auch die Achse für die Räder gehalten ist. Auf diese Weise wird das den Riegelzapfen tragende Teil als zentrales Verbindungselement ausgebildet, das den Rahmen, das Lasttragelement, die Riegelzapfen und die Räderachse miteinander verbindet. Somit kann das zentrale Verbindungselement z. B. als Spritzgußteil ausgebildet werden, in dem sämtliche Aufnahmeöffnungen für sämtliche vorgenannten Teile vorhanden sind. Femer ist es vorteilhaft, wenn auch die Aufnahmen für das eigenständige Stützteil an dem zentralen Verbindungselement angeordnet sind.

Es ist vorteilhaft, wenn das eigenständige Stützteil mittelbar oder unmittelbar am Lasttragelement oder statt dessen am Rahmen angeordnet ist. Auf diese Weise kann der Handkarren in eine Vielzahl verschiedener Treppentransporter und Sackkarren umgewandelt werden, wie sie in den Fig. 3 und 4 sowie in den Fig. 8 - 11 beschrieben sind. Das eigenständige Stützteil ist dann mittelbar am Lasttragelement angeordnet, wenn am Lasttragelement ein Verbindungselement angeordnet ist und das Stützteil am Verbindungselement angreift. Das Verbindungselement kann aus plattenförmigen Teilen bestehen.

Es ist vorteilhaft, wenn das Stützte fest oder schwenkbar am Lasttragelement oder einem daran festen Verbindungselement angeordnet ist, welches das Lasttragelement mit dem Rahmen verbindet. Ist das Stützteil fest am Lasttragelement oder am Verbindungselement angeordnet, wird schon alleine durch das Verschwenken des Rahmens oder des Lasttragelementes das jeweilige Stützteil von einer Funktionsstellung in eine Nicht-Funktionsstellung und umgekehrt gebracht. Die Stützteilebene ist dabei etwa rechtwinklig zur Lasttragelementebene ausgerichtet. Ist das Stützteil schwenkbar angeordnet, kann dieses bei Nichtbenutzung platzsparend etwa parallel zur Lasttragelementebene verschwenkt und aufbewahrt werden.

Es ist vorteilhaft, wenn das Stützteil fest oder schwenkbar am Rahmen angeordnet ist. Ist das Stützte fest am Rahmen angeordnet, wird schon alleine durch das Verschwenken des Rahmens das jeweilige Stützteil von einer Funktionsstellung in eine Nicht-Funktionsstellung und umgekehrt gebracht. Die Stützteilebene ist dabei etwa rechtwinklig zur Rahmenebene ausgerichtet. Ist das Stützteil schwenkbar am Rahmen angeordnet, kann dieses platzsparend etwa parallel zur Rahmenebene verschwenkt und aufbewahrt werden.

Es ist vorteilhaft, wenn das Stützteil in Richtung der zwischen Lasttragelement und Rahmen vorhandenen Schwenkachse und/oder quer dazu derart seitlich neben dem Lasttragelement und/oder dem Rahmen angeordnet ist, daß das Lasttragelement und/oder der Rahmen und/oder das Stützteil relativ zueinander kollisionsfrei in die jeweils gewünschte Position schwenkbar sind. Auf diese Weise kann der als Sackkarren genutzte Handkarren in einen Treppentransporter und umgekehrt verwandelt werden, indem der Rahmen und/oder das Lasttragelement und/oder das Stützteil verschwenkt wird. Dabei muß das eigenständige Stützteil nicht vom Handkarren entfernt oder an diesem montiert werden, sondern kann an diesem ständig verbleiben.

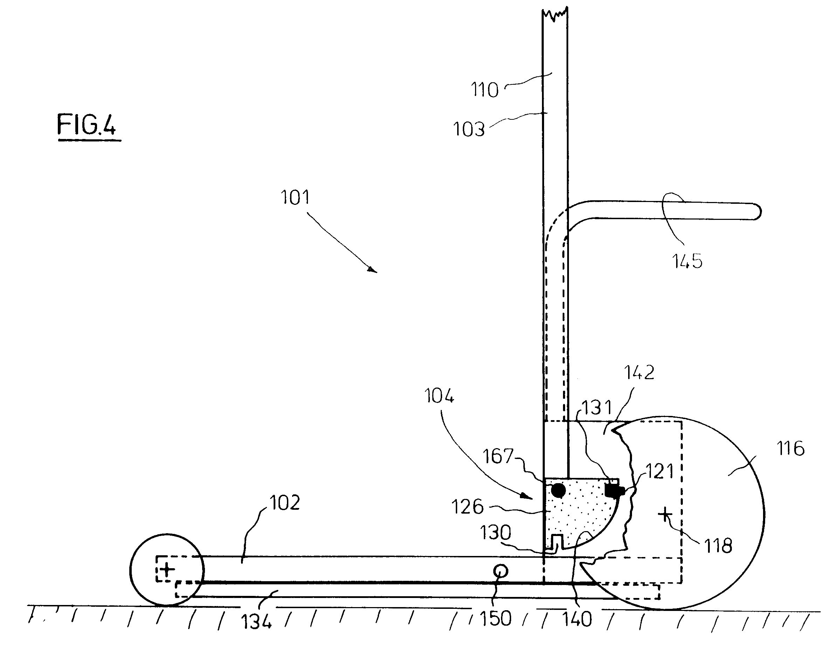

Es ist vorteilhaft, wenn die äußere Breite des Stützteiles kleiner oder größer ist als die innere Breite des Rahmens. Unter der "äußeren Breite des Stützteiles" versteht man den Abstand zwischen den Außenkanten der beiden Stützteilschenkel. Die "innere Breite des Rahmens" wird als der Abstand zwischen den Innenkanten der beiden Rahmenschenkel festgelegt. Ist die äußere Breite des Stützteiles kleiner als die innere Breite des Rahmens, kann das eigenständige Stützteil platzsparend im Bereich zwischen den beiden Rahmenschenkeln angeordnet und/oder in diesen Bereich hineinverschwenkt werden. Wird das Stützteil gemäß Fig. 4 zwischen den beiden Rahmenstreben angeordnet, verläuft das Stützteil in der Ebene des Rahmens.

Es ist von Vorteil, wenn bei etwa Parallelverlauf von Rahmenebene und Lasttragelementebene zueinander das Stützteil etwa rechtwinklig oder etwa parallel zur Rahmenebene verläuft. Verläuft das Stützteil und damit auch die Stützteilebene etwa rechtwinklig zur Rahmenebene, ist der Handkarren zum Sackkarren umgewandelt. Ist das Stützteil schwenkbar am Handkarren angeordnet, kann es in Nicht-Funktionsstellung desselben parallel zur Rahmenebene verschwenkt werden.

Es ist von Vorteil, wenn das Stützteil mit beidseitigen Endabschnitten an Aufnahmen, z. B. Rohrabschnitten, Rohrschellen, Ösen oder dergleichen, angreift und gehalten ist. Sind die Aufnahmen als Rohrabschnitte ausgebildet, muß zumindest an einem Rohrabschnitt ein Anschlag für einen zugeordneten Endabschnitt des eigenständigen Stützteiles vorhanden sein.

Es ist von Vorteil, wenn das Lasttragelement und die Aufnahmen z. B. Rohrabschnitte, Rohrschellen, Ösen oder dergleichen, für das Stützteil etwa unter einem Winkel von 90 Grad zueinander ausgerichtet sind, derart, daß bei eingesetztem Stützteil letzteres sich innerhalb einer Ebene erstreckt, die zu derjenigen des Lasttragelementes etwa rechtwinklig verläuft. Ist das Stützteil derart angeordnet, kann durch einfaches Verschwenken des Rahmens um 90 Grad - in wenigen Sekunden - aus dem Handkarren mit einer Funktion als Sackkarren ein Handkarren mit einer Funktion als Treppentransporter und umgekehrt gemacht werden. Dies ist vorteilhaft, weil dadurch zwei grundlegend verschiedene Transportgeräte in einem einzigen Transportgerät zusammengefaßt sind. Somit spart der Benutzer Geld und Abstellraum.

Es ist vorteilhaft, wenn das Stützteil zumindest einen daran klappbar gehaltenen oder steckbar halterbaren Teil, insbesondere Fußteil, aufweist. Auf diese Weise kann das Stützteil im Nicht-Funktionszustand platzsparend aufbewahrt werden.

Ein weiterer eigenständiger Erfindungsgegenstand besteht darin, daß am Rahmen ein Schwenkbügel angeordnet ist, dessen beidseitige Streben die Rahmenstreben außen übergreifen und zwischen sich aufnehmen. Auf diese Weise wird gewährleistet, daß der dem Handkarren zugeordnete Schwenkbügel aus stabilem Rundrohr ausgebildet werden kann. Dabei muß ein horizontaler Abstand zwischen aufeinanderzuweisenden Seiten der Rahmenstrebe und der Schwenkbügelstrebe im Aufbewahrzustand derselben vorhanden sein, damit jeder an einer Rahmenstrebe geführte Sicherungsstecker frei beweglich bleibt.

Es ist vorteilhaft, wenn der Schwenkbügel etwa U-Form aufweist und der Kontur des Rahmens folgt derart, daß in einer Nicht-Gebrauchsstellung die beidseitigen Streben und die oberseitige Querstrebe des Schwenkbügels in Abstand von der Außenseite entsprechender Streben des Rahmens und etwa innerhalb der gleichen Ebene wie der Rahmen verlaufen. Auf diese Weise wird garantiert, daß der Schwenkbügel in Aufbewahrstellung desselben am Rahmen so wenig Platz als möglich benötigt.

Es ist von Vorteil, wenn der Schwenkbügel an den Enden seiner beidseitigen Streben jeweils in Strebenlängsrichtung verlaufende Langlöcher aufweist, die von einem Lagerelement, z. B. Lagerbolzen, durchsetzt sind, das an der zugeordneten Rahmenstrebe angeordnet ist. Auf diese Weise kann der Schwenkbügel sowohl relativ zum Rahmen verschwenkt als auch innerhalb der Rahmenebene verschoben werden.

Es ist von Vorteil, wenn der Schwenkbügel ein Führungsglied trägt, das in der Nicht-Gebrauchsstellung des Schwenkbügels am Rahmen unter Sicherung des Schwenkbügels in Bezug auf den Rahmen angreift.

Es ist vorteilhaft, wenn das Führungsglied zwei beabstandete Schenkel aufweist, die zwischen sich einen Teil des Rahmens aufnehmen können. Auf diese Weise kann durch eine Bewegung des Schwenkbügels innerhalb der Rahmenebene der Schwenkbügel am Rahmen verriegelt und entriegelt werden. Das Führungsglied kann dabei als U-Teil ausgebildet werden.

Nachfolgend sind Ausführungsbeispiele der Erfindung anhand der Zeichnungen näher erläutert. Es zeigt:

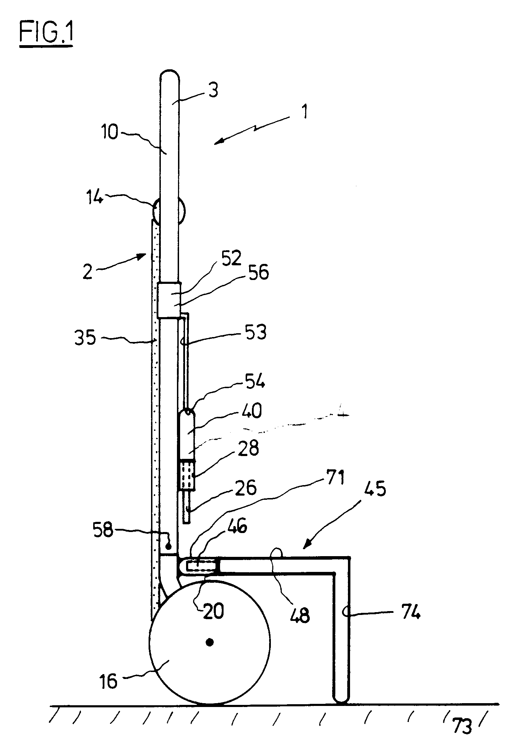

Fig. 1 den zum Sackkarren umgerüsteten Handkarren 1 in Seitansicht,

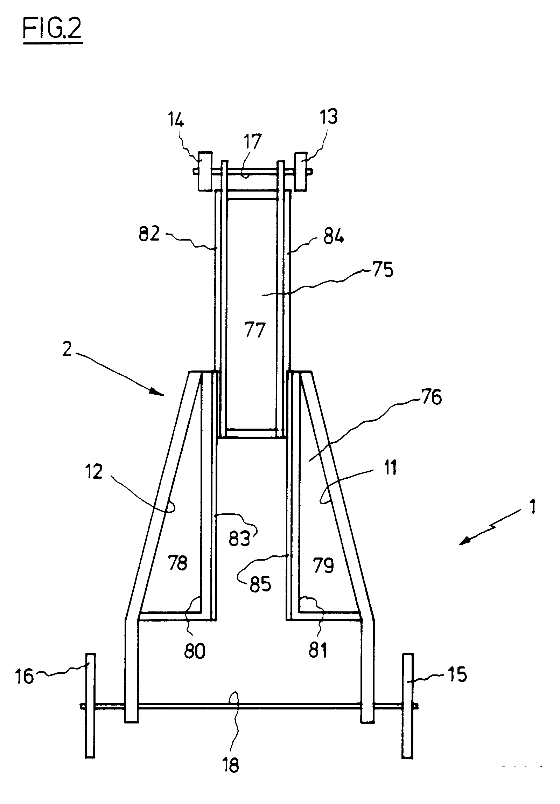

Fig. 2 das Lasttragelement des Handkarrens 1 in einer zweiten Variante, in ausgefahrenem Funktionszustand und dabei in Draufsicht,

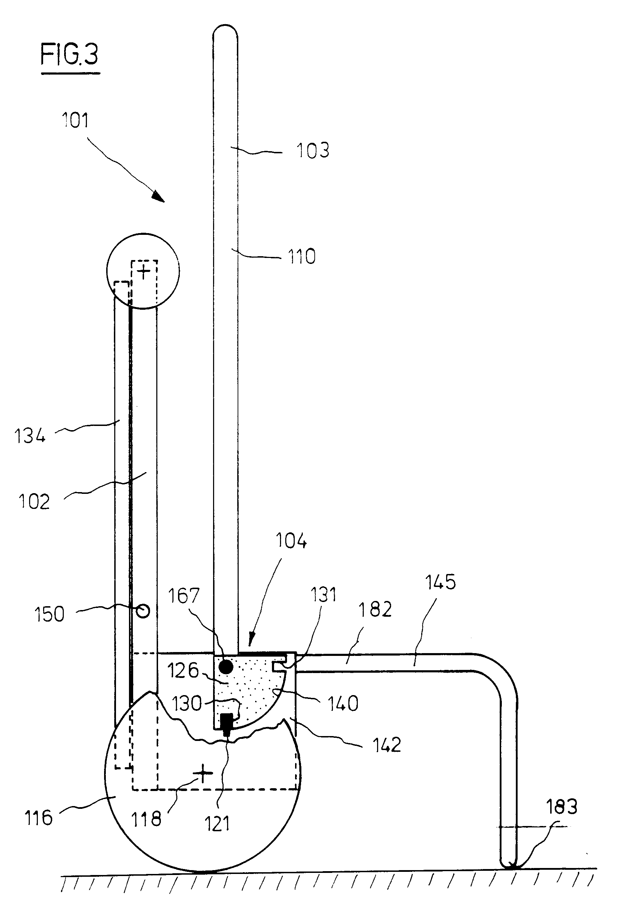

Fig. 3 den als Sackkarren ausgestalteten Handkarren 101 in Seitansicht, wobei die äußere Lagerplatte abgenommen ist,
Fig. 4 den als Treppentransporter ausgestalteten Handkarren 101 in Seitansicht, wobei die äußere Lagerplatte abgenommen ist,

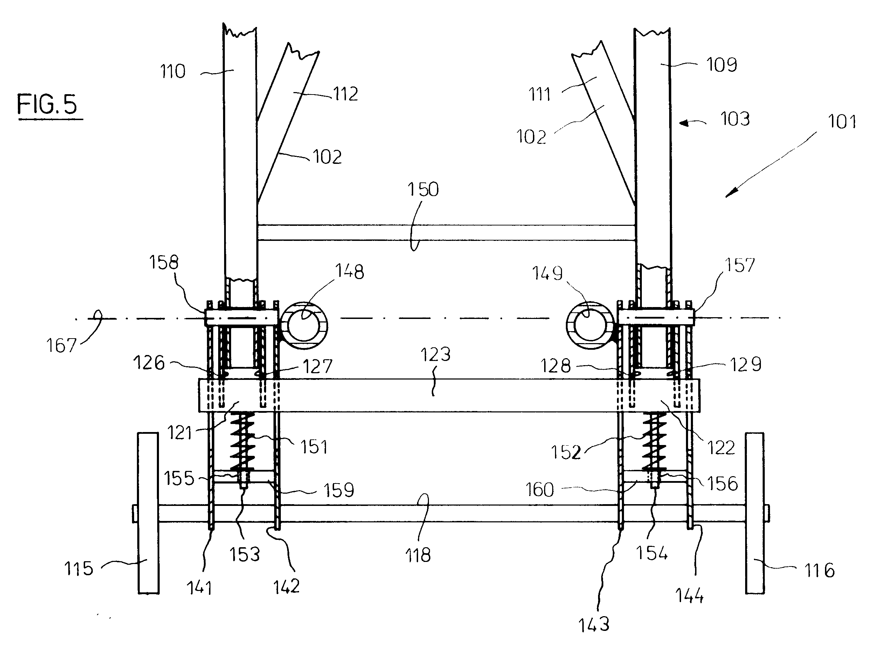

Fig. 5 den Bereich der Schwenkachse 167 des Handkarrens 101 im verriegelten Zustand und in Draufsicht,

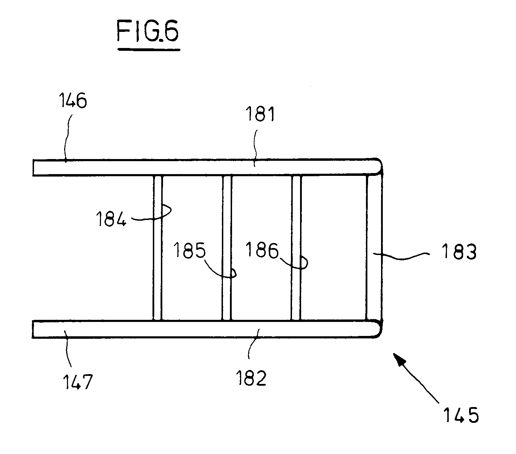

Fig. 6 das eigenständige Stützteil in Draufsicht,

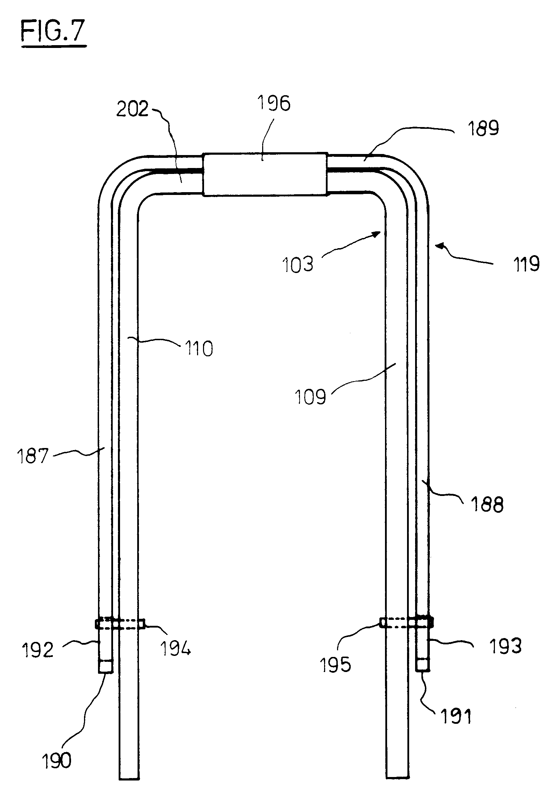

Fig. 7 den am Rahmen 103 verriegelten Schwenkbügel 119 in Vorderansicht,

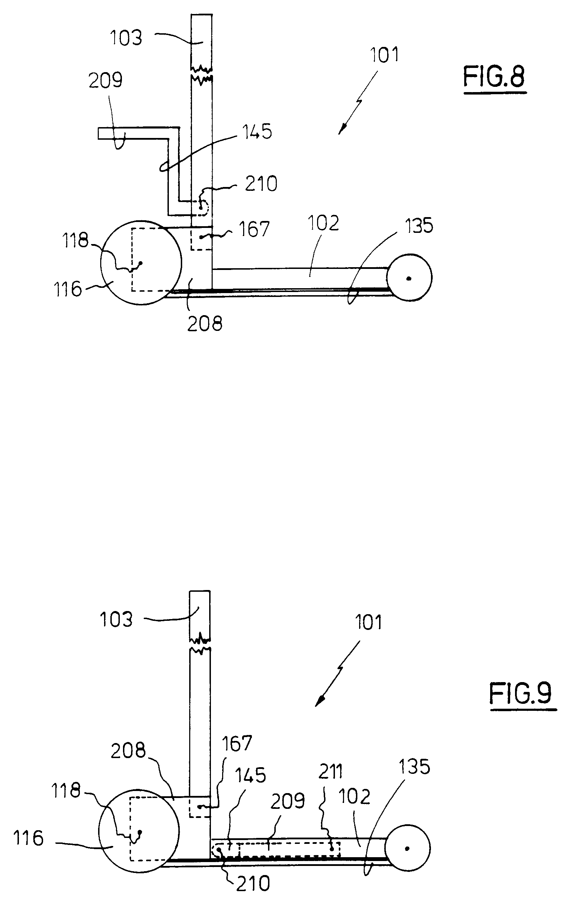

Fig. 8 den als Treppentransporter ausgestalteten Handkarren 101 in einer zweiten Ausführungsform und in Seitansicht,
Fig. 9 den als Treppentransporter ausgestalteten Handkarren 101 in einer dritten Ausführungsform und in Seitansicht,

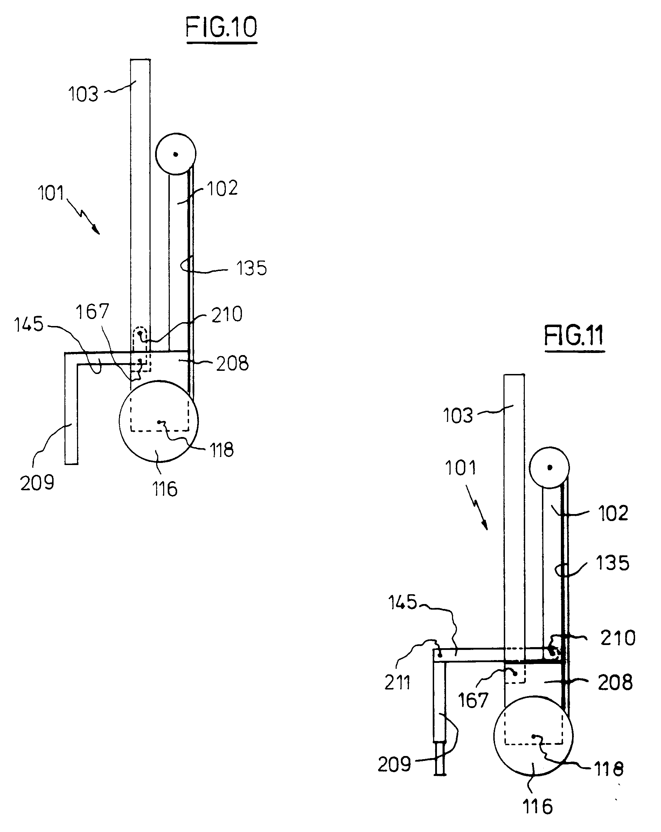

Fig. 10 den als Sackkarren ausgestalteten Handkarren 101 in der zweiten Ausführungsform und in Seitansicht,
Fig. 11 den als Sackkarren ausgestalteten Handkarren 101 in der dritten Ausführungsform und in Seitansicht.

Fig. 1 zeigt den Handkarren 1 als Sackkarren. Dabei weist der Handkarrren 1 einen Rahmen 3 auf, welcher etwa parallel zum Lasttragelement 2 ausgerichtet ist. Das Lasttragelement 2 weist das kleine Rad 14, das große Rad 16 und unterseitig die Rutschkufe 35 auf. Das Lasttragelement 2 ist über den Gelenkbolzen 58 mit dem Rahmen 3 verbunden und an diesem gesichert. Am Rahmen 3 greift die Zylinderführung 28 an, in welcher der Bügel 40 mittels des Rundbolzens 26 geführt ist. An der Rahmenstrebe 10 ist ein Sicherungsstecker 52 mittels Führungshülse 56 geführt, an welcher ein Eingreifteil 53 angreift. Das Lasttragelement 2 weist einen U-förmigen Bügel 71 auf, in dessen eine Aufnahme 20 das Steckteil 46 des Stützteiles 45 eingesteckt ist. Stützteil 45 weist eine Lastfläche 48 und einen Standfuß 74 auf.

Fig. 2 zeigt das Lasttragelement 2 des Handkarrens 1, das aus dem vorderen Teil 75 und dem hinteren Teil 76 besteht. Das hintere Teil 76 besteht aus den beiden Basisteilen 11, 12, welche mittels der Hinterachse 18 verbunden sind. Am Basisteil 12 ist das Winkelteil 80 und am Basisteil 11 ist das Winkelteil 81 angeordnet,deren lange Schenke etwa parallel zueinander verlaufen. Dabei weist der lange Schenke des Winkelteiles 80 das Führungselement 83, der lange Schenke des Winkelteiles 81 das Führungselement 85 auf. Der vordere Teil 75 des Lasttragelementes 2 ist als Schlitten 77 mit rechteckförmiger Grundfläche ausgebildet, welcher am freien Ende die Vorderachse 17 aufweist und am hinteren Teil 76 gehalten und geführt ist. An der linken Rechteckseite weist der Schlitten 77 das Führungselement 82, an der rechten Rechteckseite weist er das Führungselement 84 auf. Das Führungselement 82 ist am Führungselement 83, das Führungselement 84 ist am Führungselement 85 geführt. Sämtliche Führungselemente 82, 83 sowie 84, 85 verlaufen etwa parallel zueinander.

Fig. 3 zeigt den Handkarren 101 als Sackkarren, der aus dem Rahmen 103, dem Lasttragelement 102 mit unterseitiger Rutschkufe 134 und dem eigenständigen Stützteil 145 besteht. Dem Lasttragelement 102 ist die Lagerplatte 142 zugeordnet, wobei die Rahmenstrebe 110 um die Schwenkachse 167 schwenkgelenkig an der Lagerplatte 142 gelagert ist. Die Rahmenstrebe 110 weist am unteren Ende einen Riegelhalter 126 auf, welcher Riegelaufnahmen 130, 131 und eine Auflauffläche 140 besitzt. In die Riegelaufnahme 130 greift der Riegelzapfen 121 ein. Der Handkarren 101 besitzt eine Fixiereinrichtung 104, welcher Riegelhalter 126, Lagerplatte 142 und Riegelzapfen 121 zugeordnet sind. Das eigenständige Stützteil 145 weist eine Stützteilstrebe 182 und eine Bodenstrebe 183 auf.

Fig. 4 zeigt den Handkarren 101 als Treppentransporter, der eine Fixiereinrichtung 104 aufweist. Der Handkarren 101 weist ein Lasttragelement 102 mit unterseitiger Rutschkufe 134 auf, an welchem die Lagerplatte 142 fixiert ist. Die Rahmenstrebe 110 des Rahmens 103 ist um die Schwenkachse 167 schwenkgelenkig mit der Lagerplatte 142 verbunden, an welcher das eigenständige Stützteil 145 angreift. Am unteren Ende weist die Rahmenstrebe 110 den Riegelhalter 126 auf, welcher Riegelaufnahmen 130, 131 und eine Auflauffläche 140 besitzt. In die Riegelaufnahme 131 greift der Riegelzapfen 121 verriegelnd ein. Die Lagerplatte 142 weist die Hinterachse 118 mit dem Rad 116 auf.

Fig. 5 zeigt einen Teil des Rahmens 103, welcher Rahmenstreben 109, 110 aufweist. Die Rahmenstrebe 110 weist die Riegelhalter 126, 127 auf. Die Rahmenstrebe 109 weist die Riegelhalter 128, 129 auf. Die Rahmenstrebe 110 ist vom Gelenkbolzen 158 durchsetzt, welcher an den Lagerplatten 141, 142 gelagert ist. Die Rahmenstrebe 109 wird vom Gelenkbolzen 157 durchsetzt, der an den Lagerplatten 143, 144 gelagert ist. In den Lagerplatten 141, 142 ist der Riegelzapfen 121 geführt, in den Lagerplatten 143, 144 ist der Riegelzapfen 122 geführt. Der Riegelzapfen 121 bildet mittels eines Verbindungsstückes mit dem Riegelzapfen 122 die Längsleiste 123. Dem Riegelzapfen 121 ist der Führungsbolzen 153, dem Riegelzapfen 122 ist der Führungsbolzen 154 zugeordnet. Die Führungsbolzen 153, 154 sind am Führungsbolzenhalter 159, 160 geführt. Den Führungsbolzen 153, 154 sind die Federn 151, 152 zugeordnet. Der Rahmen 103 ist um die Schwenkachse 167 schwenkgelenkig an den Lagerplattenpaaren 141, 142 und 143, 144 gehalten, welche die Hinterachse 118 mit Rädern 115, 116 tragen. An der Lagerplatte 142 ist die Aufnahme 148, an der Lagerplatte 143 ist die Aufnahme 149 fixiert. An den Lagerplattenpaaren 141, 142 und 143, 144 greifen die Streben 112 und 111 des Lasttragelementes 102 an. An diesen Streben ist die Querstrebe 150 am Lasttragelement 102 angeordnet.

Fig. 6 zeigt das eigenständige Stützteil 145, mit Stützteilstreben 181, 182, die mittels Bodenstrebe 183 verbunden sind. Die freien Enden der Stützteilstreben 181, 182 sind als Steckteile 146, 147 ausgebildet. Zwischen den Stützteilstreben 181, 182 sind Querteile 184, 185, 186 angeordnet.

Fig. 7 zeigt den am Rahmen 103 schwenkbar gelagerten Schwenkbügel 119. Der Rahmen 103 besteht aus den Rahmenstreben 110, 109 und der Rahmenquerstrebe 202. Der Schwenkbügel 119 weist Schwenkbügelstreben 187, 188 auf, die mittels der Querstrebe 189 verbunden sind. Die Rahmenstreben 109, 110 weisen in ihrem unteren Bereich die Lagerbolzen 194, 195 auf. Die Schwenkbügelstreben 187, 188 weisen im Bereich ihrer unteren Enden 190, 191 die Langlöcher 192, 193 auf, die von den Lagerbolzen 194, 195 durchsetzt sind. Somit ist der Schwenkbügel 119 um die Lagerbolzen 194, 195 schwenkbeweglich gehalten. Der Querstrebe 189 ist das Führungsglied 196 zugeordnet.

Fig. 8 zeigt den Handkarren 101 als Treppentransporter. Dieser besitzt ein Lasttragelement 102 mit unterseitiger Rutschkufe 135, an dessen hinterem Ende das Verbindungselement 208 angeordnet ist. Am Verbindungselement 208 greift die Hinterachse 118 mit dem Rad 116 an. Der Rahmen 103 ist um die Schwenkachse 167 schwenkbar am Verbindungselement 208 gehalten. Das Stützteil 145 ist um die Schwenkachse 210 schwenkbar am Rahmen 103 gehalten und weist ein Fußteil 209 auf.

Fig. 9 zeigt den Handkarren 102 als Treppentransporter. Dieser besitzt das Lasttragelement 102 mit unterseitiger Rutschkufe 135, an dessen hinterem Ende das Verbindungselement 208 angeordnet ist. Der Rahmen 103 ist um die Schwenkachse 167 schwenkbar am Verbindungselement 208 gehalten. Das Stützteil 145 ist um die Schwenkachse 210 schwenkbar am Lasttragelement 102 gehalten. Das Fußteil 209 ist um die Schwenkachse 211 am Stützteil 145 schwenkbar gehalten.

Fig. 10 zeigt den Handkarren aus Fig. 8 als Sackkarren. Dabei verlaufen Rahmen 103 und Lasttragelement 102 etwa parallel, wobei Rahmen 103 und die etwa horizontale Lastfläche des am Rahmen 103 gesicherten Stützteiles 145 einen Winkel von ca. 90 Grad einschließen. Fußteil 209 steht am Untergrund auf.

Fig. 11 zeigt den Handkarren aus Fig. 9 als Sackkarren. Dabei verlaufen Rahmen 103 und Lasttragelement 102 etwa parallel, wobei Rahmen 103 und die etwa horizontale Lastfläche des am Lasttragelement 102 gesicherten Stützteiles 145 einen Winkel von ca. 90 Grad einschließen. Das Teleskop-Fußteil 209 ist auf maximale Länge ausgefahren und steht am Untergrund auf.

### Wirkungsweise

Ist der Handkarren 1 als Sackkarren gemäß Fig. 1 ausgestaltet, ist das Stützteil 45, welches zwei Steckteile 46, 47 besitzt, mit diesen soweit als möglich in die Aufnahmen 20, 21 des U-förmigen Bügels 71 eingesteckt, der zum Lasttragelement 2 gehört. Der Standfuß 74 kann klappbar oder steckbar an der Lastfläche 48 gehalten sein.

Ein weiterer Vorteil bei der Verwendung des zum Sackkarren umgerüsteten Handkarrens besteht darin, daß dieser mit Rutschkufen 34, 35 ausgerüstet ist, mit denen man den Sackkarren über Randsteine etc. gleiten lassen kann. Transportierte Getränkekisten können dabei mit den Sicherungssteckern 52 gesichert werden.

Das Lasttragelement 2 des in Fig. 2 gezeigten Handkarrens 1 befindet sich in seiner langen Ausfahrposition. Dabei ist das vordere Teil 75 am hinteren Teil 76 des Lasttragelementes 2 unverschieblich gesichert. Soll das Lasttragelement 2 aus dieser Position in seine Position kürzester Längenausdehnung gebracht werden, wird das Sicherungselement gelöst und das vordere Teil 75 soweit als möglich in Richtung Hinterachse 18 geschoben. Die Führungselemente 82, 84 des vorderen Teiles 75 und die Führungselemente 83, 85 des hinteren Teiles 76 sind in einer vorteilhaften Ausführungsform als Führungsschienen ausgebildet. Dabei kann das vordere Teil 75 derart leichtgängig am hinteren Teil 76 gehalten sein, daß das vordere Teil 75 bei Abkippen des Lasttragelementes 2 sich selbsttätig in seine Ausfahrposition oder in seine Einfahrposition bewegt. Das vordere Teil 75 ist mittels eines Sicherungselementes in seiner Einfahr- bzw. Ausfahrposition gesichert.

Vorteilhaft ist es ferner, die Rutschkufen 34, 35 durch zumindest ein Endlos-Transportband zu ersetzen, das um Umlenkrollen geführt wird.

Das Stützteil 45 kann auch an einem anderen Bereich des Lasttragelementes 2 oder am Rahmen 3 angreifen und dabei erheblich breiter als der Rahmen 3 ausgebildet sein.

Das eigenständige Stützteil 145 wird am Handkarren 101 durch Einschieben seiner Steckteile 146, 147 in die Aufnahmen 148, 149 (Fig. 5) bis zum Anschlag 161 befestigt. Nun kann der Handkarren 101 als Sackkarren benutzt werden. Will der Benutzer den Sackkarren in Fig. 3 in einen Treppentransporter umwandeln, drückt er vorzugsweise mit dem Fuß die Längsleiste 123 und damit die verbundenen Riegelzapfen 121, 122 nach unten, so daß diese nicht mehr in die zugeordneten Riegelaufnahmen 130 eingreifen. Sodann schwenkt er den Rahmen 103 in Richtung auf das eigenständige Stützteil 145. Während dieses Schwenkvorganges werden die Riegelzapfen 121, 122 durch die zugeordneten Druckfedern 151, 152 auf die bogenförmigen Auflaufflächen 140 ihrer Riegelhalter 126, 127 und 128, 129 gedrückt. Ist der Rahmen 103 nun in etwa rechtwinklige Ausrichtung zum Lasttragelement 102 verschwenkt, rasten die Riegelzapfen 121, 122 in die zugeordneten Riegelaufnahmen 131 der Riegelhalter 126, 127 und 128, 129 ein. Damit ist der Handkarren 101 von einem Sackkarren in einen Treppengleiter umgewandelt und wird nun gemäß Fig. 4 am Untergrund abgestellt.

Soll der Treppengleiter in Fig. 4 in einen Sackkarren verwandelt werden, werden die Riegelzapfen 121, 122 durch Verschieben der Längsleiste 123 in Richtung auf die Hinterachse 118 entriegelt und der Rahmen 103 wird in eine parallele Position zum Lasttragelement 102 verschwenkt und wieder verriegelt.

Fig. 8 zeigt den Handkarren 101 als Treppentransporter. Stützteil 145 hat in Seitansicht etwa Z-Form und ist in der gezeigten Aufbewahrposition am Rahmen 103 gehalten und gesichert. Die äußere Breite des Stützteiles 145 kann kleiner, größer oder gleich der inneren Breite des Rahmens sein. Soll der Treppentransporter in einen Sackkarren umgewandelt werden, wird der Rahmen 103 in eine etwa parallele Position zum Lasttragelement 102 verschwenkt. Sodann wird das am Rahmen 103 gesicherte Stützteil 145 entsichert und so lange verschwenkt, bis die Stützteillastfläche mit der Rahmenebene etwa einen Winkel von 90 Grad einschließt. Nun wird der Handkarren 101 aufgerichtet und als Sackkarren gemäß Fig. 10 am Untergrund abgestellt.

Fig. 9 zeigt den Handkarren 101 als Treppentransporter. Stützteil 145 mit zugeordnetem Fußteil 209 greift am Lasttragelement 102 an und ist in etwa paralleler Ausrichtung zum Lasttragelement 102 in der Lasttragelementebene an diesem gesichert. Die äußere Breite des Stützteiles ist kleiner als die innere Breite des Rahmens 103 und kleiner als die innere Breite des Lasttragelementes. In Draufsicht gesehen folgt die äußere Kontur des Stützteiles etwa der inneren Kontur des Lasttragelementes 102. Soll der Treppentransporter in einen Sackkarren umgewandelt werden, wird der Rahmen 103 in eine etwa parallele Lage zum Lasttragelement 102 verschwenkt. Sodann wird das Stützteil 145 entsichert und um seine Schwenkachse 210 solange verschwenkt, bis die Stützteillasfläche mit der Rahmenebene etwa einen Winkel von 90 Grad einschließt. Nun wird das Fußteil 209 so lange verschwenkt, bis Fußteil 209 mit Stützteil 145 etwa einen Winkel von 90 Grad einschließt. Nun wird der Handkarren 101 aufgerichtet und als Sackkarren gemäß Fig. 11 am Untergrund abgestellt.

In einer vorteilhaften Ausführungsform wird das eigenständige Stützteil 145 gemäß Fig. 4 ausgebildet. Das Stützteil 145 greift dabei auch an der als Verbindungselement ausgebildeten Lagerplatte 142 an, wobei aber seine Stützteillasfläche bei der Ausgestaltung des Handkarrens 101 als Treppengleiter parallel zur Ebene des Rahmens 103 und in Abstand von dieser verläuft.

In einer vorteilhaften Ausführungsform ist das eigenständige Stützteil 145 als ebenes, flächiges Teil ausgebildet. Ist der Handkarren 101 als Treppengleiter ausgebildet, greift dieses Stützteil 145 an der zur Achse 118 weisenden Rahmenseite des Rahmens 103 an und verläuft etwa parallel zum Lasttragelement 102 und oberhalb der Oberkante der Räder 116. Am freien Ende weist Stützteil 145 ein Fußteil auf.

Der Begriff "Stützteilebene" oder auch "Stützteillastfläche" bezeichnet den Bereich des eigenständigen Stützteiles, auf welchem die Transportlast aufgesetzt wird.

## Patentansprüche

1. Handkarren zum Transport von Lasten über Treppen, zwischen dessen relativ zueinander bewegbaren Lasttragelement und Rahmen eine Fixiereinrichtung vorgesehen ist, mittels welcher Rahmen und Lasttragelement relativ zueinander festlegbar ist, **gekennzeichnet durch** ein eigenständiges Stützteil (45).

2. Handkarren nach Anspruch 1, **dadurch gekennzeichnet,** daß das Stützteil (45) lösbar am Lasttragelement (2) anbringbar ist.

3. Handkarren nach mindestens einem der vorausgehenden Ansprüche, **dadurch gekennzeichnet,** daß das Stützteil (45) schwenkbar am Lasttragelement (2) anbringbar ist.

4. Handkarren nach mindestens einem der vorausgehenden Ansprüche, **dadurch gekennzeichnet**, daß das Stützteil (45) beabstandete, den Riegelteilen (5, 6) am Rahmen (3) entsprechende Steckteile (46, 47) aufweist und mittels Eingreifen dieser Steckteile (46, 47) in die Riegelteile (7, 8) des Lasttragelementes (2) an letzterem lösbar befestigbar ist.

5. Handkarren nach mindestens einem der vorausgehenden Ansprüche, **dadurch gekennzeichnet,** daß das Stützteil (45) aus einem etwa U-förmigen Bügel, insbesondere in Form eines Rohrstückes, gebildet ist.

6. Handkarren, insbesondere nach einem oder mehreren der vorangehenden Ansprüche, **dadurch gekennzeichnet,** daß mindestens zwei bewegliche Teile (75, 76) des Lasttragelementes (2) aneinander schiebbar miteinander verbunden sind.

7. Handkarren, insbesondere nach einem oder mehreren der vorangehenden Ansprüche, **dadurch gekennzeichnet**, daß die Fixiereinrichtung (4) aus zusammenwirkenden Blockierteilen besteht, die als Riegelteile ausgebildet sind und daß die Riegelteile zumindest einen Eingreifriegel, der am einen Teil gehalten ist und einen mit mindestens einer Riegelaufnahme, in die der Eingreifriegel eingreifen kann, versehenen Riegelhalter (126, 127; 128, 129) aufweisen, der am anderen Teil, insbesondere dem Rahmen (103), gehalten ist.

8. Handkarren nach mindestens einem der vorausgehenden Ansprüche, **dadurch gekennzeichnet,** daß der Eingreifriegel als verschiebbarer Riegelzapfen (121, 122) ausgebildet ist, der am einen Teil geführt ist.

9. Handkarren nach mindestens einem der vorausgehenden Ansprüche, **dadurch gekennzeichnet,** daß der Riegelhalter (126, 127; 128, 129) um eine Schwenkachse (167) schwenkbar ausgebildet ist und zwei Riegelaufnahmen (130, 131; 138, 139) aufweist, deren Mittenlängsachsen (206, 207) etwa einen Winkel von 90 Grad miteinander einschließen.

10. Handkarren nach mindestens einem der vorausgehenden Ansprüche, **dadurch gekennzeichnet,** daß die Riegelzapfen (121, 122) mittels einer vorzugsweise damit einstückigen Längsleiste (123) verbunden sind, die etwa parallel zur Schwenkachse (167) des Rahmens (103) verläuft.

11. Handkarren nach mindestens einem der vorausgehenden Ansprüche, **dadurch gekennzeichnet,** daß der Rahmen (103) an dem Teil (124) um seine Schwenkachse (167) schwenkbar gehalten und gelagert ist, der den jeweiligen Riegelzapfen (121, 122) trägt und vorzugsweise, daß an diesem Teil (124) auch die Achse (118) für die Räder (115, 116) gehalten ist.

12. Handkarren nach mindestens einem der vorausgehenden Ansprüche, **dadurch gekennzeichnet**, daß das eigenständige Stützteil (145) mittelbar oder unmittelbar am Lasttragelement (102) oder statt dessen am Rahmen (103) angeordnet ist.

13. Handkarren nach mindestens einem der vorausgehenden Ansprüche, **dadurch gekennzeichnet**, daß das Stützteil (145) fest oder schwenkbar am Lasttragelement (102) oder einem daran festen Verbindungselement (208) angeordnet ist, welches das Lasttragelement (102) mit dem Rahmen (103) verbindet.

14. Handkarren nach mindestens einem der vorausgehenden Ansprüche, **dadurch gekennzeichnet**, daß das Stützteil (145) fest oder schwenkbar am Rahmen (103) angeordnet ist.

15. Handkarren nach mindestens einem der vorausgehenden Ansprüche, **dadurch gekennzeichnet**, daß das Stützteil (145) in Richtung der zwischen Lasttragelement (102) und Rahmen (103) vorhandenen Schwenkachse (167) und/oder quer dazu derart seitlich neben dem Lasttragelement (102) und/oder dem Rahmen (103) angeordnet ist, daß das Lasttragelement (102) und/oder der Rahmen (103) und/oder das Stützteil (145) relativ zueinander kollisionsfrei in die jeweils gewünschte Position schwenkbar sind.

16. Handkarren nach mindestens einem der vorausgehenden Ansprüche, **dadurch gekennzeichnet**, daß die äußere Breite des Stützteiles (145) kleiner oder größer ist als die innere Breite des Rahmens (103).

17. Handkarren nach mindestens einem der vorausgehenden Ansprüche, **dadurch gekennzeichnet**, daß bei etwa Parallelverlauf von Rahmenebene und Lasttragelementebene zueinander das Stützteil (145) etwa rechtwinklig oder etwa parallel zur Rahmenebene verläuft.

18. Handkarren nach mindestens einem der vorausgehenden Ansprüche, **dadurch gekennzeichnet**, daß das Stützteil (145) mit beidseitigen Endabschnitten an Aufnahmen (148, 149) z. B. Rohrabschnitten, Rohrschellen, Ösen oder dergleichen, angreift und gehalten ist.

19. Handkarren nach mindestens einem der vorausgehenden Ansprüche, **dadurch gekennzeichnet**, daß das Lasttragelement (102) und die Aufnahmen (148, 149) z. B. Rohrabschnitte, Rohrschellen, Ösen oder dergleichen, für das Stützteil (145) etwa unter einem Winkel von 90 Grad zueinander ausgerichtet sind, derart, daß bei eingesetztem Stützteil (145) letzteres sich innerhalb einer Ebene erstreckt, die zu derjenigen des Lasttragelementes (102) etwa rechtwinklig verläuft.

20. Handkarren nach mindestens einem der vorausgehenden Ansprüche, **dadurch gekennzeichnet**, daß das Stützte (145) zumindest einen daran klappbar gehaltenen oder steckbar halterbaren Teil, insbesondere Fußteil (209), aufweist.

21. Handkarren, insbesondere nach einem oder mehreren der vorangehenden Ansprüche, **gekennzeichnet durch** einen Schwenkbügel (119), dessen beidseitige Streben (187, 188) die Rahmenstreben (109, 110) außen übergreifen und zwischen sich aufnehmen.

22. Handkarren nach mindestens einem der vorausgehenden Ansprüche, **dadurch gekennzeichnet**, daß der Schwenkbügel (119) etwa U-Form aufweist und der Kontur des Rahmens (103) folgt derart, daß in einer Nicht-Gebrauchsstellung die beidseitigen Streben (187, 188) und die oberseitige Querstrebe (189) des Schwenkbügels (119) in Abstand von der Außenseite entsprechender Streben (109, 110) des Rahmens (103) und etwa innerhalb der gleichen Ebene wie der Rahmen (103) verlaufen.

23. Handkarren nach mindestens einem der vorausgehenden Ansprüche, **dadurch gekennzeichnet,** daß der Schwenkbügel (119) an den Enden (190, 191) seiner beidseitigen Streben (187, 188) jeweils in Strebenlängsrichtung verlaufende Langlöcher (192, 193) aufweist, die von einem Lagerelement, zum Beispiel Lagerbolzen (194, 195), durchsetzt sind, das an der zugeordneten Rahmenstrebe (110, 109) angeordnet ist.

24. Handkarren nach mindestens einem der vorausgehenden Ansprüche, **dadurch gekennzeichnet**, daß der Schwenkbügel (119) ein Führungsglied (196) trägt, das in der Nicht-Gebrauchsstellung des Schwenkbügels (119) am Rahmen (103) unter Sicherung des Schwenkbügels (119) in Bezug auf den Rahmen (103) angreift.

25. Handkarren nach mindestens einem der vorausgehenden Ansprüche, **dadurch gekennzeichnet**, daß das Führungsglied (196) zwei beabstandete Schenkel (197, 198) aufweist, die zwischen sich einen Teil des Rahmens (103) aufnehmen können.
